# FASCICULE DE BREVET EUROPEEN

(11) **EP 4 530 191 B1**
(45) Date de publication et mention de la délivrance du brevet: **24.12.2025**
(21) Numéro de dépôt: 24178001.4
(22) Date de dépôt: 24.05.2024
(51) Int. Cl.: B64D 25/00, B60Q 3/46, G08B 7/06, B64D 45/00

(54) **CLOISON POUR VEHICULE COMPORTANT UN DISPOSITIF D'ASSISTANCE POUR L'EVACUATION DE PERSONNES PAR UNE ISSUE DE SECOURS DE LA CLOISON**
TRENNWAND FÜR EIN FAHRZEUG MIT EINER HILFSVORRICHTUNG ZUR EVAKUIERUNG VON PERSONEN DURCH EINE NOTAUSLENKUNG DER TRENNWAND
PARTITION FOR A VEHICLE COMPRISING A DEVICE FOR ASSISTING THE EVACUATION OF PERSONS BY AN EMERGENCY EXIT FROM THE PARTITION

(30) Priorité: 29.09.2023 FR 2310429
(43) Date de publication de la demande: 02.04.2025
(73) Titulaire: Airbus Helicopters, 13725 Marignane Cedex (FR)
(72) Inventeur: JOEDICKE, Philippe, 13580 LA FARE LES OLIVIERS (FR); FRUITET, Pierre, 30170 POMPIGNAN (FR); SOLINSKI, Christophe, 13180 GIGNAC-LA-NERTHE (FR)
(74) Mandataire: GPI Brevets

(56) Documents cités:
- EP-A1- 2 278 566
- EP-B2- 0 828 657
- WO-A1-2021/111109
- DE-U1- 202004 014 700
- US-A- 4 365 232
- US-A- 4 597 033
- US-A1- 2010 175 945

## Description

La présente invention se situe dans le domaine des dispositifs de sécurité des véhicules, et des aéronefs en particulier. La présente invention concerne une cloison pour véhicule comportant un dispositif d'assistance pour l'évacuation de personnes par une issue de secours de la cloison.

Un tel dispositif d'assistance peut être agencé dans de nombreux véhicules, dont un aéronef, voire éventuellement dans un bâtiment.

Par exemple, un véhicule, et notamment un aéronef, peut comprendre une ou plusieurs issues de secours pour évacuer, si nécessaire, les individus présents dans ce véhicule. L'expression « issue de secours » désigne une ouverture, possiblement obstruée par un panneau et éventuellement un hublot, par laquelle un individu peut s'extraire après éjection du panneau.

Cependant, des dégagements de fumée peuvent se produire durant l'évacuation et peuvent perturber la vision des individus. Une telle fumée rend alors difficile le repérage d'une issue de secours, et en particulier de l'issue de secours la plus proche, d'autant plus durant un moment anxiogène. De même, en cas d'amerrissage, de l'eau peut pénétrer dans le véhicule rendant également difficile le repérage des issues de secours.

De nuit, l'éclairage intérieur du véhicule peut être en outre hors service, les issues de secours n'étant alors plus clairement visibles et identifiables.

Dès lors, certains règlements peuvent imposer la présence de dispositifs d'indication des issues de secours, par exemple dans les bâtiments accueillant du public ou dans les véhicules, et les aéronefs notamment.

Dans le domaine des hélicoptères, la réglementation CS29.812 impose la mise en place d'un dispositif d'éclairage d'évacuation d'urgence désigné par l'acronyme *HEEL* pour la désignation en langue anglaise « Helicopter Emergency Egress Lighting ». Cette réglementation exige l'utilisation d'un système d'éclairage d'urgence autour des issues de secours.

L'éclairage doit être clairement visible dans toutes les conditions, en particulier pour permettre sa visualisation en présence de fumée, d'eau ou dans l'obscurité.

Un système *HEEL* d'éclairage d'une issue de secours répandu aujourd'hui et respectant la réglementation comporte plusieurs segments lumineux alimentés électriquement et munis d'ampoules ou de diodes électroluminescences. Ces divers segments lumineux sont répartis autour de la ou des issues de secours afin d'encadrer partiellement chaque issue de secours en émettant, quand cela est nécessaire, une lumière monochrome, par exemple bleue ou verte, apte à être visible dans des conditions de vision dégradées. Un tel système d'éclairage d'une issue de secours peut comporter une batterie électrique et un onduleur afin d'alimenter les bandeaux lumineux comme le décrit le document US 4365232.

Le document EP 2278566 décrit que de tels systèmes d'éclairage d'une issue de secours peuvent être munis de capteurs et d'une unité de contrôle pour détecter une ou plusieurs conditions de déclenchement du système d'éclairage. Les capteurs comportent, par exemple, un détecteur d'impulsion, et/ou tout type de capteurs.

De tels systèmes d'éclairages peuvent avoir un encombrement important, et également une masse non négligeable. De plus, ils peuvent être difficiles à intégrer sur des cloisons ayant des géométries complexes. En outre, ces systèmes d'éclairages se limitent à indiquer les issues de secours pour des individus situés à l'intérieur de l'aéronef.

D'autres systèmes sont connus. Le document US 4521835 décrit un système d'éclairage de secours comportant une pluralité de diodes électroluminescences montées sur une barre semi-rigide.

Le document US 2009/0309763 décrit des éléments lumineux montés en bordure d'hublots. Ces éléments lumineux encadrent partiellement ou totalement les hublots. Ces éléments lumineux se présentent sous la forme de bandes lumineuses comportant un matériau photoluminescent.

Le document US 2014/0070047 décrit un élément structurel comprenant une alternance de couches conductrices et de couches isolantes. Chaque couche conductrice est en liaison électrique avec une source d'alimentation électrique ainsi qu'avec des dispositifs de sortie, par exemple des dispositifs d'éclairage, afin d'alimenter électriquement ces dispositifs de sortie.

Le document EP 1017953 décrit un système d'éclairage d'une issue de secours activé chimiquement. Ce système utilise deux agents chimiques qui émettent de la lumière lorsqu'ils sont mélangés l'un à l'autre. Une fois mélangés, les deux agents chimiques sont envoyés dans un conduit transparent disposé autour de l'issue de secours.

Le document DE 20 2004 014700 décrit un système d'éclairage d'une issue de secours obturée par une trappe de toit d'un véhicule. Le système d'éclairage utilise sa propre alimentation électrique et comporte plusieurs dispositifs d'éclairage disposés sur le pourtour de la trappe de toit. Le système d'éclairage peut également comporter un dispositif rétroéclairé d'identification de la trappe de toit, ainsi qu'un dispositif d'éclairage dédié pour augmenter la visibilité d'un dispositif de verrouillage manuelle de la trappe de toit.

Le document EP 2278566 décrit quant à lui un système d'éclairage pour identifier une sortie de véhicule dont des parois arrière et latérale comportent une porte et/ou une trappe, faisant office d'entrée et/ou de sortie du véhicule 1. Le système d'éclairage comporte trois bandes allongées d'éclairage situés disposées asymétriquement autour de la porte et de la trappe.

Par ailleurs, le document US 2010/175945 décrit une sortie de secours, dont le pourtour est doté d'un revêtement luminescent, tel qu'un revêtement phosphorescent. Une partie des moyens de déverrouillage de la sortie de secours, tels que des leviers et des poignées, peut également être recouverte d'un revêtement luminescent.

Le document WO 2021/111109 décrit un panneau structural d'un aéronef comportant une couche électriquement conductrice associée à une couche de points quantiques, de sorte que la couche électriquement conductrice fournisse de l'énergie électrique aux points quantiques, afin qu'ils émettent de la lumière.

Le document US 4597033 décrit un système d'éclairage de secours , flexible et léger, adapté pour être activé dans des situations d'urgence afin d'indiquer une issue de secours aux occupants d'un aéronef. Ce système d'éclairage comprend un ou des éléments étanches, flexibles et allongés capables de transmettre de façon directionnelle une lumière. Ce ou ces éléments sont transparents et peuvent être pliés pour définir un contour d'une sortie.

Le document US 4365232 décrit une unité d'éclairage de secours dotée d'une lampe électroluminescente, d'une batterie et d'un onduleur, et destinée à être utilisée pour localiser une sortie d'avion. Divers dispositifs sont prévus pour allumer automatiquement la lampe lors d'une situation de détresse. L'unité d'éclairage est configurée pour servir de poignée destinée à être utilisée pour quitter un avion en panne.

Le document EP 0828657 décrit un système d'éclairage de secours pour avion comportant des bandes photoluminescentes placées au sol.

Le document US6843010 est éloigné de la présente divulgation en décrivant une enseigne lumineuse.

La présente invention a alors pour objet de proposer un dispositif d'assistance innovant facilitant l'évacuation de personnes par une issue de secours. Un tel dispositif d'assistance est utilisable dans tout véhicule, mais aussi dans d'autres circonstances, par exemple au sein d'un immeuble.

La présente invention vise ainsi une cloison pour véhicule selon la revendication 1.

La cloison est remarquable en ce que les émetteurs lumineux comprennent au moins un premier émetteur émettant une première lumière d'une première couleur et encadrant au moins partiellement le panneau ainsi qu'au moins un deuxième émetteur émettant une deuxième lumière d'une deuxième couleur distincte de la première couleur et indiquant une position de la poignée d'éjection.

Le dispositif d'assistance peut être activé de manière usuelle lors d'une évacuation, par exemple suite à un accident voire un amerrissage dans le cas particulier d'un aéronef. Le dispositif d'assistance peut être activé manuellement à l'aide d'un interrupteur par le pilote du véhicule, un membre d'équipage, voire un passager. De manière complémentaire ou alternative, le dispositif d'assistance peut être activé automatiquement à l'aide d'un ou de plusieurs capteurs, détectant par exemple un choc, une forte décélération ou une immersion.

Un interrupteur ou un capteur commande alors l'alimentation électrique du circuit électrique par le dispositif d'alimentation électrique, les émetteurs lumineux étant alimentés électriquement et émettant la première lumière et la deuxième lumière.

Le dispositif d'assistance permet alors, une fois activé, de faciliter l'accès d'individus à une issue de secours et d'assister ainsi leur évacuation hors du véhicule par cette issue de secours, d'une part en indiquant clairement la position de l'issue de secours à l'aide du ou des premiers émetteurs lumineux et, d'autre part, en indiquant également clairement et distinctivement la position de la ou des poignées d'éjection à l'aide du ou des deuxièmes émetteurs.

De fait, une fois devant la cloison, les individus à évacuer visualisent rapidement, grâce à la deuxième lumière émise par le ou les deuxièmes émetteurs, la ou les poignées d'éjection permettant d'éjecter le panneau mobile. Ces individus ont alors accès à l'issue de secours.

La première et la deuxième couleur sont définies pour permettre à un individu d'identifier clairement où se trouvent l'issue de secours et la ou les poignées d'éjection. Par exemple, la première couleur peut être à dominante verte ou bleue alors que la deuxième couleur peut être rouge ou orange. Ces couleurs permettent notamment d'identifier clairement où se trouvent l'issue de secours et la ou les poignées d'éjection sous l'eau.

La forme et/ou l'agencement de chaque premier émetteur et de chaque deuxième émetteur peuvent aussi permettre de les différencier de façon significative. Par exemple, un premier émetteur encadre majoritairement, voire totalement, le panneau mobile. A l'inverse un deuxième émetteur n'est positionné que très partiellement autour du panneau, à proximité d'une poignée d'éjection, ou peut être décalé pour être positionné sur ou autour de la poignée d'éjection.

Par ailleurs, le dispositif d'alimentation électrique du dispositif d'assistance peut être partagé avec d'autres dispositifs ou systèmes d'un véhicule, voire relié à une source d'alimentation électrique centralisée du véhicule. Le dispositif d'alimentation électrique peut alternativement être indépendant et autonome, et comporter par exemple un générateur de courant électrique alternatif ou une batterie couplée à un convertisseur continu/alternatif.

Le dispositif d'assistance peut être agencé sur la structure de la cloison, voire entre le panneau et cette structure. En particulier, le circuit électrique et les émetteurs lumineux peuvent être positionnés sur la structure de la cloison, voire entre le panneau et cette structure.

La cloison selon l'invention peut être une cloison fixe ou bien une cloison mobile, formant par exemple une porte.

La cloison selon l'invention peut comprendre une ou plusieurs des caractéristiques qui suivent, prises seules ou en combinaison.

Selon une possibilité, ledit au moins un premier émetteur et ledit au moins un deuxième émetteur peuvent être agencés uniquement à l'intérieur d'un véhicule afin d'indiquer principalement aux passagers du véhicule, ainsi qu'aux membres d'équipage l'issue de secours ainsi que la ou les poignées d'éjection.

Alternativement, ledit au moins un premier émetteur et ledit au moins un deuxième émetteur peuvent être agencés uniquement à l'extérieur du véhicule afin d'indiquer principalement aux équipes de secours l'issue de secours ainsi que la ou les poignées d'éjection.

Alternativement, ledit au moins un premier émetteur et ledit au moins un deuxième émetteur peuvent être agencés simultanément à l'intérieur et à l'extérieur du véhicule.

Selon une possibilité compatible avec les précédentes, ledit au moins un premier émetteur peut émettre la première lumière qui est visuellement continue et encadre au moins partiellement le panneau. De la sorte, un bandeau lumineux émettant la première couleur encadre au moins partiellement, voire totalement le panneau.

Ledit au moins un deuxième émetteur peut être agencé à une des extrémités du bandeau lumineux formé par ledit au moins un premier émetteur, voire à ses deux extrémités. La deuxième lumière est ainsi visuellement en continu de la première lumière, formant conjointement un bandeau lumineux. Ledit au moins un deuxième émetteur peut ainsi être positionné en regard ou en vis-à-vis d'une ou des poignées d'éjection.

Ledit au moins un deuxième émetteur peut également être agencé en dehors du bandeau lumineux formé par ledit au moins un premier émetteur. Ledit au moins un deuxième émetteur peut ainsi être positionné en regard ou en vis-à-vis d'une ou des poignées d'éjection ou encadrer partiellement ou totalement une ou des poignées. La deuxième lumière est ainsi visuellement discontinue du bandeau lumineux formé par ledit au moins un premier émetteur.

Selon une possibilité compatible avec les précédentes, ledit au moins un premier émetteur et ledit au moins un deuxième émetteur peuvent émettre respectivement la première lumière et la deuxième lumière qui sont visuellement continues. De la sorte, un bandeau lumineux comportant la première couleur et la deuxième couleur encadre au moins partiellement, voire totalement, le panneau.

Ledit au moins un deuxième émetteur peut ainsi être positionné en regard ou en vis-à-vis d'au moins une parmi la ou les poignées d'éjection. Ledit au moins un premier émetteur et ledit au moins un deuxième émetteur sont ainsi positionnés de façon alternée au moins partiellement autour du panneau, la première lumière et la deuxième lumière formant conjointement un bandeau lumineux.

De la sorte, le ou les membres d'équipage peuvent visualiser rapidement à l'aide d'un même bandeau lumineux d'une part la position de l'issue de secours à l'aide du ou des premiers émetteurs pour s'y diriger, et d'autre part la position de la poignée d'éjection à l'aide du ou des deuxièmes émetteurs afin de saisir la poignée d'éjection et d'éjecter le panneau pour libérer ainsi l'ouverture de cette issue de secours.

De plus, l'utilisation des premiers et deuxièmes émetteurs sur un même bandeau lumineux facile le montage de ces premiers et deuxièmes émetteurs, en limitant en outre le nombre de liaisons et/ou connecteurs électriques nécessaires en cas de plusieurs bandeaux lumineux disjoints.

Selon une possibilité compatible avec les précédentes, le dispositif d'assistance peut comporter un masquage recouvrant au moins partiellement ledit au moins un premier émetteur et/ou ledit au moins un deuxième émetteur. Ce masquage permet de masquer localement la première lumière émise par ledit au moins un premier émetteur et/ou la deuxième lumière émise pour former un mot par exemple.

Le masquage peut être total et recouvrir un ou plusieurs émetteurs lumineux sur une zone limitée, bloquant ainsi totalement la lumière émise. Un tel masquage total peut ainsi bloquer localement la lumière émise, qui n'est par exemple plus continue, tout en conservant la continuité électrique grâce aux premiers émetteurs et/ou aux deuxièmes émetteurs.

Le masquage peut aussi être partiel et recouvrir en partie un ou plusieurs émetteurs lumineux, bloquant ainsi partiellement la lumière émise.

Le masquage partiel peut comporter par exemple une ou plusieurs formes géométriques, un ou plusieurs symboles, une ou plusieurs lettres et/ou un ou plusieurs chiffres. Ce marquage partiel permet ainsi que soient affichés sur le bandeau lumineux formé par ledit au moins un premier émetteur et ledit au moins un deuxième émetteur, la ou les formes géométriques, un mot, et/ou un nombre.

Selon une possibilité compatible avec les précédentes, les émetteurs lumineux comprennent au moins un troisième émetteur émettant une troisième lumière et le dispositif d'assistance comporte un masquage, dont au moins un masquage partiel, recouvrant ainsi au moins partiellement ledit au moins un troisième émetteur.

Un bandeau lumineux complémentaire, formé par le troisième émetteur, permet ainsi d'afficher un ou des symboles comprenant par exemple une ou plusieurs formes géométriques, une ou plusieurs lettres et/ou un ou plusieurs chiffres.

Selon une possibilité compatible avec les précédentes, les émetteurs lumineux peuvent comporter des peintures électroluminescentes ou des encres électroluminescentes. Ces peintures électroluminescentes ou ces encres électroluminescentes comportent, par exemple, des pigments qui émettent de la lumière lorsqu'ils sont placés dans un champ magnétique ou traversés par un courant électrique. Ainsi, lorsque le circuit électrique est alimenté électriquement par le dispositif d'alimentation électrique, les peintures ou les encres électroluminescentes émettent de la lumière.

L'utilisation de telles peintures ou encres électroluminescentes permet avantageusement d'avoir des émetteurs lumineux peu encombrants, en particulier d'une très faible épaisseur, et ayant une faible masse. De plus, l'utilisation de telles peintures ou encres électroluminescentes permet également d'obtenir des formes lumineuses diverses et variées, voire complexes, pour s'adapter notamment aux courbes et au relief de la structure de la cloison.

Selon cette possibilité, les émetteurs lumineux peuvent comporter une superposition de couches dont au moins une couche conductrice, au moins une couche isolante électriquement, une couche de peinture électroluminescente ou d'encre électroluminescente, et au moins une couche de protection transparente ou translucide.

Lorsque le dispositif d'assistance comporte un masquage total ou partiel, une couche de masquage est ajoutée, par exemple avant ou après la couche de protection transparente ou translucide.

Alternativement ou de façon complémentaire, chaque émetteur lumineux peut comporter des diodes électroluminescentes ou encore une fibre optique et un générateur de lumière relié à la fibre optique.

Selon une possibilité compatible avec les précédentes, la cloison peut comporter un cadre lumineux fixé sur la structure de la cloison, autour du panneau, le cadre lumineux comportant un support sur lequel sont agencés les émetteurs lumineux. Le cadre lumineux peut aussi comprendre le circuit électrique, voire le dispositif d'alimentation électrique du dispositif d'assistance, agencés sur le support.

Le support peut avoir une forme et un relief complémentaires d'une forme et d'un relief de la structure autour du panneau afin de s'adapter à la structure. De la sorte, le cadre lumineux s'intègre parfaitement à la structure de la cloison.

Le cadre lumineux peut être fixé de manière usuelle à la structure de la cloison. Par exemple, le support du cadre lumineux est vissé ou riveté à la structure. Le support du cadre lumineux peut aussi être collé sur la structure.

La présente invention a également pour objet un véhicule, par exemple un aéronef, comportant une cloison telle que précédemment décrite. Cette cloison est, par exemple, agencée entre une cellule du véhicule et le milieu extérieur au véhicule.

L'invention et ses avantages apparaîtront avec plus de détails dans le cadre de la description qui suit avec des exemples donnés à titre illustratif en référence aux figures annexées qui représentent :
- la figure 1, une cloison selon l'invention,
- la figure 2, une cloison selon l'invention,
- la figure 3, une cloison selon l'invention,
- la figure 4, une cloison selon l'invention, et
- la figure 5, une coupe d'une émetteur lumineux.

Les éléments présents dans plusieurs figures distinctes sont affectés d'une seule et même référence.

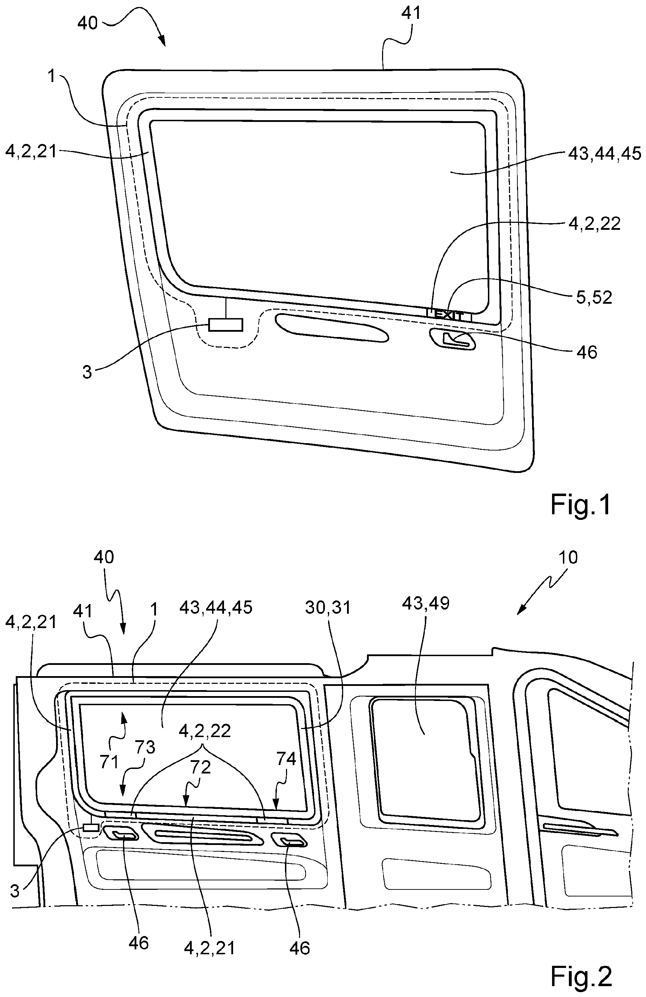

Les figures 1 à 3 présentent une cloison 40 selon l'invention. Cette cloison 40 peut être installée au sein de divers systèmes, et par exemple au sein d'un bâtiment ou d'un véhicule 10, en particulier d'un aéronef. Cette cloison 40 peut être une cloison fixe.

Alternativement, cette cloison 40 peut être une cloison mobile, telle une porte.

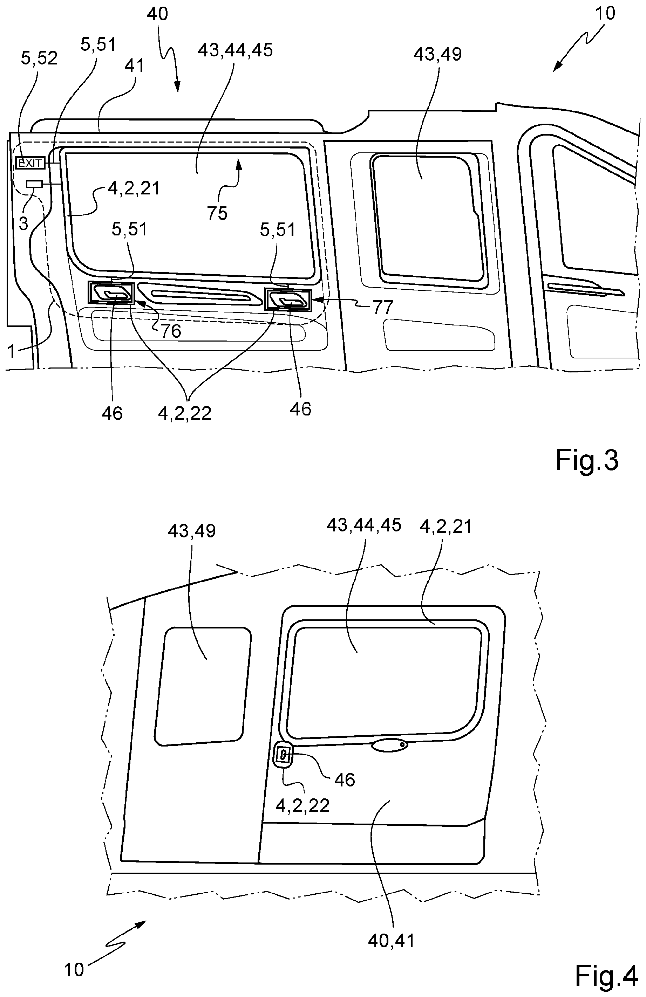

Une telle cloison 40 comporte une structure 41 percée d'une ouverture 43 formant une issue de secours 44. La cloison 40 comporte également un panneau 45 mobile obturant l'issue de secours 44 et une ou plusieurs poignées d'éjection 46 permettant une éjection du panneau 45. Le panneau 45 peut être opaque, translucide ou transparent. Le panneau 45 peut comprendre par exemple un hublot. Une cloison 40 peut comporter plusieurs ouvertures 43, toutes ne formant pas nécessairement une issue de secours 44, comme représenté sur les figures 2 et 3. Une ouverture 43 ne formant pas une issue de secours 44 est obturée par un panneau fixe 49.

La ou les poignées d'éjection 46 permettent de façon usuelle une éjection du panneau 45 mobile de la structure 41. Le panneau 45 éjecté libère ainsi l'ouverture 43. Au sein d'un véhicule, un passager ou un membre de l'équipage du véhicule 10 peut alors traverser l'ouverture 43 afin de sortir du véhicule 10. Par exemple, le panneau 45 peut être attaché à la structure 41 par des dispositifs de fixation usuels, éventuellement réversibles. De tels dispositifs de fixation comportent à titre d'exemple des goupilles pénétrant chacune dans un orifice du panneau 45 et dans un orifice de la structure 2, chaque goupille étant solidaire d'un câble apte à tirer sur la goupille respective pour la faire sortir d'au moins un desdits orifices, la poignée d'éjection permettant d'agir sur ce câble.

La cloison 40 comporte un dispositif d'assistance 1 pour faciliter l'évacuation de personnes par l'issue de secours 44. Le dispositif d'assistance 1 comporte un circuit électrique 4, un dispositif d'alimentation électrique 3 alimentant électriquement le circuit électrique 4, ainsi que des émetteurs lumineux 2 reliés électriquement au circuit électrique 4. Les émetteurs lumineux 2 émettent une lumière lorsque le circuit électrique 4 est alimenté électriquement par le dispositif d'alimentation électrique 3.

En particulier, le dispositif d'alimentation électrique 3 peut comporter une batterie électrique reliée à un convertisseur continu/alternatif ou un générateur de courant électrique alternatif. De la sorte, le dispositif d'alimentation électrique 3 du dispositif d'assistance 1 est autonome et indépendant d'une alimentation centralisée du véhicule 10, qui peut ne plus fonctionner en cas d'accident du véhicule 10.

Par ailleurs, les émetteurs lumineux 2 comportent au moins un premier émetteur 21 et au moins un deuxième émetteur 22. Le ou les premiers émetteurs 21 émettent une première lumière d'une première couleur et sont agencés autour de l'ouverture 43 de sorte à encadrer au moins partiellement cette ouverture 43 et le panneau 45. Le ou les deuxièmes émetteurs 22 émettent une deuxième lumière d'une deuxième couleur distincte de la première couleur et sont agencés à proximité d'une ou des poignées d'éjection 46 de sorte à indiquer sa position ou leurs positions.

De la sorte, lorsque les émetteurs lumineux 2 sont alimentés électriquement et émettent une lumière, des individus peuvent voir les lumières émises, y compris lorsque les conditions de visibilités sont dégradées, par exemple en présence de fumée, d'eau ou de l'obscurité. Ces individus peuvent alors évaluer d'une part la position d'une issue de secours 44, et d'autre part la position d'une poignée d'éjection 46. Ces individus peuvent ainsi se rendre rapidement et directement vers cette issue de secours 44, et vers la poignée d'éjection 46 pour éjecter le panneau 45 afin de sortir par l'ouverture 43 de la cloison 40.

Le dispositif d'alimentation électrique 3 peut alimenter électriquement le circuit électrique 4 et donc les émetteurs lumineux 2, par exemple suite à un accident d'un véhicule 10. Un interrupteur ou un contacteur (non représenté) peut par exemple relier le dispositif d'alimentation électrique 3 et le circuit électrique 4. L'interrupteur peut être actionné manuellement par un individu, par exemple un passager ou un membre d'équipage d'un véhicule. Le contacteur peut être relié à un ou plusieurs capteurs provoquant la commutation du contacteur dans des conditions prédéterminées. De tels capteurs peuvent par exemple comprendre un détecteur de choc, un accéléromètre apte à détecter une forte décélération ou un capteur d'immersion.

Selon un premier mode de réalisation représenté sur la figure 1, ledit au moins un premier émetteur 21 s'étend de façon continue sur une ligne entourant le panneau 45, de sorte à émettre la première lumière de façon sensiblement continue pour encadrer ainsi visuellement quasiment la majorité du panneau 45.

Selon ce premier mode de réalisation, ledit au moins un deuxième émetteur 22 est agencé entre deux extrémités dudit au moins un premier émetteur 21 de sorte que la première lumière et la deuxième lumière soient visuellement continues. Ledit au moins un deuxième émetteur 22 est agencé en regard de la poignée d'éjection 46 de sorte à indiquer clairement sa position.

Ledit au moins un premier émetteur 21 et ledit au moins un deuxième émetteur 22 émettent ainsi respectivement la première lumière et la deuxième lumière à la suite l'une de l'autre, celles-ci étant visuellement continues pour former conjointement un bandeau lumineux. Ledit au moins un premier émetteur 21 peut comporter un ou plusieurs premiers émetteurs 22 adjacents. De façon similaire, ledit au moins un deuxième émetteur 22 peut comporter un ou plusieurs deuxièmes émetteurs 22 adjacents.

Selon un deuxième mode de réalisation représenté sur la figure 2, le dispositif d'assistance 1 comporte plusieurs premiers émetteurs 21 et plusieurs deuxièmes émetteurs 22 agencés de façon continue et alternée autour de l'ouverture 43. Par exemple, le dispositif d'assistance 1 comporte deux premiers tronçons 71,72 munis de premiers émetteurs 21 et deux deuxièmes tronçons 73,74 munis de deuxièmes émetteurs 22. Chaque premier tronçon 71,72 s'étend alors entre deux deuxièmes tronçons 73,74, et chaque deuxième tronçon 73,74 s'étend alors entre deux premiers tronçons 71,72.

Les deux deuxièmes tronçons 73,74 sont agencés en regard respectivement de deux poignées d'éjection 46.

Selon un troisième mode de réalisation représenté sur la figure 3, un premier émetteur 21 comporte un tronçon principal 75 qui encadre totalement l'ouverture 43 et le panneau 45. La première lumière est émise de façon sensiblement continue, encadrant ainsi visuellement la totalité de l'issue de secours 44.

Selon ce troisième mode de réalisation, ledit au moins un deuxième émetteur 22 présente un tronçon secondaire 76,77 qui signale voire entoure une poignée d'éjection 46 et émet sensiblement en continu la deuxième lumière.

Les tronçons secondaires 76,77 peuvent être reliés électriquement au tronçon principal 75, par une liaison électrique ou par un ou plusieurs émetteurs lumineux 2 recouverts d'un masquage 5 bloquant tout ou partie de la lumière émise. Dans ce cas, il s'agit d'un masquage total 51, bloquant localement toute la lumière susceptible d'être émise entre le tronçon principal 75 et les tronçons secondaires 76,77.

Le dispositif d'assistance 1 peut aussi comporter un masquage 5 agencé partiellement autour de l'ouverture 43, sur une partie dudit au moins un deuxième émetteur 22 comme représenté sur la figure 1. Ce masquage 5 est selon cet exemple un masquage partiel 52 pouvant former un ou plusieurs symboles, de sorte à former par exemple un mot tel que « EXIT » comme représenté sur la figure 1.

Le masquage partiel 52 peut représenter directement le mot, qui apparaît alors de couleur noire par exemple, entouré de la deuxième lumière comme représenté sur la figure 1. Le masquage partiel 52 peut alternativement masquer le contour du mot, qui apparaît alors de la seconde couleur comme représenté sur la figure 3.

Un tel masquage 5 peut également être agencé sur une partie dudit au moins un premier émetteur 21.

Quel que soit le mode de réalisation, le dispositif d'assistance 1 peut comporter au moins un troisième émetteur 23 émettant une troisième lumière et un masquage partiel 52 représentant un ou plusieurs symboles formant par exemple un mot, comme représenté sur la figure 3. La troisième lumière peut être de la première couleur ou de la deuxième couleur, ou d'une couleur distincte de la première couleur et de la deuxième couleur.

Ledit au moins un troisième émetteur 23 est décalé de l'ouverture 43 ainsi que du ou des premiers émetteurs 21 et du ou des deuxièmes émetteurs 22. La troisième lumière n'encadre ainsi pas l'issue de secours 44 et n'indique pas la position de la poignée d'éjection 46.

Ledit au moins un troisième émetteur 23 peut être relié électriquement audit au moins un premier émetteur 21 par une liaison électrique. Alternativement, ledit au moins un troisième émetteur 23 peut être relié directement audit au moins un premier émetteur 21, un masquage total 51 recouvrant sur une zone limitée ledit au moins un troisième émetteur 23 entre ledit au moins un premier émetteur 21 et le masquage partiel 52. De la sorte, le mot affiché par ledit au moins un troisième émetteur 23 est isolé visuellement dudit au moins un premier émetteur 21 et dudit au moins un deuxième émetteur 22.

Selon les modes de réalisation représentés sur les figures 1 à 3, les émetteurs lumineux 2 sont agencés uniquement à l'intérieur d'un véhicule 10 pour être visibles par les passagers et les membres d'équipage du véhicule 10 comme représenté sur les figures 1, 2 et 3. Alternativement ou de façon complémentaire, des émetteurs lumineux 2 peuvent être agencés à l'extérieur du véhicule 10 afin d'être visibles par une équipe de secours intervenant sur le véhicule 10, comme représenté sur la figure 4.

Par ailleurs, quel que soit le mode de réalisation, les émetteurs lumineux 2 ainsi qu'au moins partiellement le circuit électrique 4 peuvent être agencés sur la structure 41 tel que décrit précédemment ou bien sur un cadre lumineux 30 fixé sur la structure 41 autour de l'ouverture 43 et du panneau 45 comme représenté sur la figure 2. Le cadre lumineux 30 comporte un support 31 sur lequel sont agencés les émetteurs lumineux 2 ainsi qu'au moins partiellement le circuit électrique 4.

Le support 31 peut avoir une forme et un relief complémentaires d'une forme et d'un relief de la structure 41 autour de l'ouverture 43 et du panneau 45. Le support 31, et par suite le cadre lumineux 30, peuvent être rigides ou souples. De la sorte, le support 31 s'adapte parfaitement à la structure 41. Le cadre lumineux 30 peut ainsi être fabriqué et préparé à l'extérieur du véhicule 10, et intégré facilement et rapidement sur la structure 41 de la cloison 40.

Le support 31 peut être fixé efficacement à la structure 41, par exemple par collage, rivetage, vissage ou tout autre moyen de fixation usuel.

Le cadre lumineux 30 peut être relié électriquement au dispositif d'alimentation électrique 3. Alternativement, le cadre lumineux 30 peut comporter le dispositif d'alimentation électrique 3.

En outre, les émetteurs lumineux 2 peuvent comporter de façon habituelle des diodes électroluminescentes ou tout autre dispositif équivalent générant une lumière. Alternativement, les émetteurs lumineux 2 peuvent comporter une ou plusieurs fibres optiques reliées à un ou plusieurs générateurs de lumière. Par exemple, ledit au moins un premier émetteur 21 peut comporter une première fibre optique reliée à un premier générateur de lumière et ledit au moins un deuxième émetteur 22 peut comporter une deuxième fibre optique reliée à un deuxième générateur de lumière.

Alternativement, les émetteurs lumineux 2 peuvent comporter des peintures électroluminescentes ou des encres électroluminescentes.

Dans ce cas, les émetteurs lumineux 2 peuvent comporter une superposition de couches dont au moins une couche conductrice, au moins une couche isolante électriquement, une couche de peinture électroluminescente ou d'encre électroluminescente, et au moins une couche de protection transparente ou translucide. Les émetteurs lumineux 2 peuvent aussi comporter une couche de masquage.

De fait, lorsque le circuit électrique 4 est alimenté électriquement par le dispositif d'alimentation électrique 3, les pigments électroluminescents de la peinture ou de l'encre électroluminescente de ces émetteurs lumineux 2 émettent de la lumière.

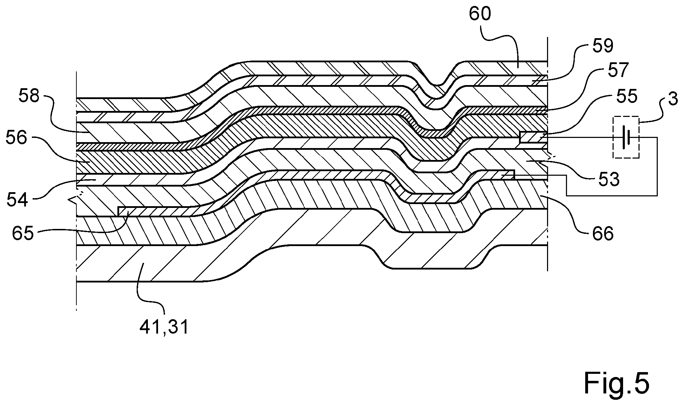

Un exemple d'une telle superposition de couches formant une peinture électroluminescente est représenté sur la figure 5. Une telle superposition de couches peut s'appliquer sur la structure 41 de la cloison 40 ou sur le support 31 du cadre lumineux 30. Cette structure 41 ou ce support 31 peut être plan ou au contraire comporter des aspérités, des creux, et/ou des bosses, comme représenté sur la figure 5.

Une couche initiale isolante électriquement, formant un substrat 66, peut être appliquée sur la structure 41 ou sur le support 31, en particulier si la structure 41 ou le support 31 est au moins partiellement électriquement conducteur. Ce substrat 66 a une épaisseur suffisante pour éviter, par exemple, des fuites de courant ou un claquage électrique avec le support 31 ou la structure 41. Dans le cas où le support 31 ou la structure 41 est non conducteur électriquement, ce substrat 66 peut ne pas être nécessaire. Le support 31 peut par exemple comporter un film avec adhésif.

Ensuite, une couche conductrice inférieure 65 en matériau à faible résistance électrique et donc fortement conducteur électriquement est appliquée, en particulier sur la surface devant être lumineuse. Cette couche conductrice inférieure 65 permet à un courant électrique d'être réparti sur toute la surface que l'on souhaite éclairée.

Puis, une couche diélectrique 53, à savoir isolante électriquement, est appliquée sur la couche conductrice inférieure 65 pour éviter tout risque de court-circuit. Une couche lumineuse 54, comportant la peinture ou l'encre électroluminescente, est appliquée sur la couche diélectrique 53. Cette couche lumineuse 54 comporte notamment les pigments susceptibles d'émettre de la lumière.

Une couche conductrice intermédiaire 55 est partiellement appliquée sur la couche lumineuse 54. Cette couche conductrice intermédiaire 55 est, comme la couche conductrice inférieure 65, en un matériau à faible résistance électrique et donc fortement conducteur électriquement. La couche conductrice intermédiaire 55 et la couche conductrice inférieure 65 peuvent être faites avec le même matériau. Cette couche conductrice intermédiaire 55 est appliquée sous la forme d'une bande étroite en périphérie de la couche lumineuse 54 pour recouvrir très partiellement cette couche lumineuse 54 afin de ne pas la masquer et donc ne pas bloquer l'émission de lumière. De plus, la couche conductrice intermédiaire 55 ne doit pas être positionnée au droit de la couche conductrice inférieure 65 comme représenté sur la figure 4.

Une couche conductrice supérieure 56 est appliquée sur la couche lumineuse 54 et la couche conductrice intermédiaire 55, en étant en contact avec la couche conductrice intermédiaire 55. La couche conductrice supérieure 56 est en matériau conducteur pour permettre une bonne circulation et répartition du courant électrique dans les différentes couches. Cette couche conductrice supérieure 56 est translucide ou transparente pour permettre que la lumière émise par la couche lumineuse 54 soit visible.

Une couche isolante supérieure 57 diélectrique transparente ou translucide est appliquée. Cette couche isolante supérieure 57 encapsule le courant électrique dans les couches inférieures pour protéger des chocs électriques. Elle permet également de protéger les différentes couches des rayures, de la contamination et des rayons ultraviolets notamment, tout en permettant le passage de la lumière émise par la couche lumineuse 54.

Si besoin, une couche de masquage 58 peut être appliquée sur la couche isolante supérieure 57 dans la ou les zones devant être masquées, à savoir où aucune lumière ne doit être émise.

Enfin, en fonction des exigences réglementaires ou de l'environnement dans lequel est utilisée la cloison 40, une couche de protection 59 peut être appliquée. Cette couche de protection 59 est transparente ou translucide et peut, par exemple, permettre d'assurer une étanchéité à l'eau de la superposition des couches. Cette couche de protection 59 peut également assurer une résistance au feu ou aux hautes températures permettant par exemple de réduire la propagation d'un feu. Cette couche de protection 59 peut, par exemple, comporter un revêtement contenant un polyuréthane.

Enfin, une couche de finition 60 peut être appliquée sur la couche de protection 59. Cette couche de finition 60 est transparente ou translucide et a une fonction principalement esthétique en recouvrant l'ensemble de la structure 41 ou du support 31.

Parmi cette superposition de couches, la couche conductrice supérieure 56 et la couche conductrice inférieure 65 sont reliées respectivement aux deux bornes du dispositif d'alimentation électrique 3. De plus, la couche conductrice supérieure 56 n'étant pas positionnée au droit de la couche conductrice inférieure 65, une bonne répartition du courant électrique ou du champ magnétique induit est obtenue, dans la couche lumineuse 54.

Sous l'action de ce courant électrique, des électrons peuvent sauter entre la couche conductrice supérieure 56 et la couche conductrice inférieure 65. En traversant la couche lumineuse 54, les électrons excitent les pigments qui émettent des photons lors de leur retour à l'état d'équilibre, générant ainsi une lumière qui traversent alors les couches supérieures, à savoir de la couche conductrice supérieure 56 jusqu'à la couche isolante supérieure 57, voire à la couche de protection 59 et/ou la couche de finition 60. Toutefois, dans les zones où la superposition de couches comporte la couche de masquage 58, la lumière est arrêtée par cette couche de masquage 58.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Cloison (40) pour véhicule (10), ladite cloison (40) comportant une structure (41) délimitant une ouverture (43) formant une issue de secours (44), ladite cloison (40) comportant un panneau (45) mobile obturant ladite issue de secours (44) et au moins une poignée d'éjection (46) permettant une éjection dudit panneau (45), ladite cloison (40) comportant un dispositif d'assistance (1) comprenant un dispositif d'alimentation électrique (3) alimentant électriquement un circuit électrique (4), ledit dispositif d'assistance (1) comprenant des émetteurs lumineux (2) reliés électriquement au circuit électrique (4), lesdits émetteurs lumineux (2) générant une lumière lorsque ledit circuit électrique (4) est alimenté électriquement par ledit dispositif d'alimentation électrique (3),
lesdits émetteurs lumineux (2) comprennent au moins un premier émetteur (21) émettant une première lumière d'une première couleur et encadrant au moins partiellement ledit panneau (45) ainsi qu'au moins un deuxième émetteur (22) émettant une deuxième lumière indiquant une position de la poignée d'éjection (46).
**caractérisée en ce que** ladite deuxième lumière est d'une couleur distincte de la ladite première couleur et que ladite première lumière et ladite deuxième lumière forment conjointement un bandeau lumineux qui encadre au moins partiellement ledit panneau (45).

2. Cloison (40) selon la revendication 1,
selon laquelle ladite première lumière forme un bandeau lumineux qui encadre au moins partiellement ledit panneau (45).

3. Cloison (40) selon l'une quelconque des revendications 1 à 2,
selon laquelle ledit au moins un deuxième émetteur (22) émettant ladite deuxième lumière est en vis-à-vis de ladite poignée d'éjection (46).

4. Cloison (40) selon l'une quelconque des revendications 1 à 2,
selon laquelle ledit au moins un deuxième émetteur (22) émettant ladite deuxième lumière encadre au moins partiellement de ladite poignée d'éjection (46).

5. Cloison (40) selon l'une quelconque des revendications 1 à 4,
selon laquelle ledit dispositif d'assistance (1) comporte un masquage (5) formant un ou plusieurs symboles principaux (6) et recouvrant au moins partiellement ledit au moins un premier émetteur (21) ou ledit au moins un deuxième émetteur (22).

6. Cloison (40) selon l'une quelconque des revendications 1 à 5,
selon laquelle lesdits émetteurs lumineux (2) comprennent au moins un troisième émetteur (23) émettant une troisième lumière, un masque partiel (52) formant un ou plusieurs symboles et recouvrant au moins partiellement ledit au moins un troisième émetteur (23).

7. Cloison (40) selon l'une quelconque des revendications 1 à 6,
selon laquelle lesdits émetteurs lumineux (2) comportent des peintures électroluminescentes ou des encres électroluminescentes.

8. Cloison (40) selon la revendication 7,
selon laquelle lesdits émetteurs lumineux (2) comportent une superposition de couches dont au moins une couche conductrice, au moins une couche isolante électriquement, une couche de peinture électroluminescente ou d'encre électroluminescente, et au moins une couche de protection transparente ou translucide.

9. Cloison (40) selon l'une quelconque des revendications 1 à 8,
selon laquelle ladite cloison (40) comporte un cadre lumineux (30) fixé sur ladite structure (41) autour dudit panneau (45), ledit cadre lumineux (30) comportant un support (31) sur lequel sont agencés lesdits émetteurs lumineux (2).

10. Cloison (40) selon la revendication 9,
selon laquelle ledit support (31) a une forme et un relief complémentaires d'une forme et d'un relief de ladite structure (41 ) autour dudit panneau (45).

11. Cloison (40) selon l'une quelconque des revendications 9 à 10,
selon laquelle ledit cadre lumineux (30) comporte ledit circuit électrique (4) et ledit dispositif d'alimentation électrique (3).

12. Cloison (40) selon l'une quelconque des revendications 1 à 11,
selon laquelle ledit au moins un premier émetteur (21) et ledit au moins un deuxième émetteur (22) sont agencés uniquement à l'intérieur d'un véhicule (10), uniquement à l'extérieur dudit véhicule (10) ou simultanément à l'intérieur et à l'extérieur dudit véhicule (10).

13. Véhicule (10) comportant au moins une cloison selon l'une quelconque des revendications 1 à 12.

## Patentansprüche

1. Trennwand (40) für ein Fahrzeug (10), wobei die Trennwand (40) eine Struktur (41) aufweist, die eine einen Notausgang (44) bildende Öffnung (43) begrenzt, wobei die Trennwand (40) eine bewegliche Platte (45), die den Notausgang (44) verschließt, und mindestens einen Auswurfgriff (46) aufweist, der ein Auswerfen der Platte (45) ermöglicht, wobei die Trennwand (40) eine Hilfsvorrichtung (1) umfasst, die eine Stromversorgungsvorrichtung (3) umfasst, die einen Stromkreis (4) mit Strom versorgt, wobei die Hilfsvorrichtung (1) Lichtquellen (2) umfasst, die elektrisch mit dem Stromkreis (4) verbunden sind, wobei die Lichtquellen (2) Licht erzeugen, wenn der Stromkreis (4) von der Stromversorgungseinrichtung (3) mit Strom versorgt wird,
wobei die Lichtquellen (2) mindestens eine erste Quelle (21), die ein erstes Licht einer ersten Farbe emittiert und die Platte (45) mindestens teilweise umrahmt, sowie mindestens eine zweite Quelle (22) umfassen, die ein zweites Licht emittiert, das eine Position des Auswurfgriffs (46) anzeigt,
**dadurch gekennzeichnet, dass** das zweite Licht eine von der ersten Farbe unterschiedliche Farbe aufweist und dass das erste Licht und das zweite Licht zusammen ein Lichtband bilden, das die Platte (45) zumindest teilweise umrahmt.

2. Trennwand (40) nach Anspruch 1,
bei der das erste Licht eine Lichtleiste bildet, die die Platte (45) zumindest teilweise umrahmt.

3. Trennwand (40) nach einem der Ansprüche 1 bis 2,
bei der die mindestens eine zweite Quelle (22), die das zweite Licht emittiert, dem Auswurfgriff (46) gegenüberliegt.

4. Trennwand (40) nach einem der Ansprüche 1 bis 2,
bei der die mindestens eine zweite Quelle (22), die das zweite Licht emittiert, den Auswurfgriff (46) zumindest teilweise umrahmt.

5. Trennwand (40) nach einem der Ansprüche 1 bis 4,
bei der die Hilfsvorrichtung (1) eine Abdeckung (5) aufweist, die ein oder mehrere Hauptsymbole (6) bildet und die mindestens eine erste Quelle (21) oder die mindestens eine zweite Quelle (22) zumindest teilweise abdeckt.

6. Trennwand (40) nach einem der Ansprüche 1 bis 5,
bei der die Lichtquellen (2) mindestens eine dritte Quelle (23) umfassen, die ein drittes Licht emittiert, wobei eine Teilabdeckung (52) die ein oder mehrere Symbole bildet und die mindestens eine dritte Quelle (23) zumindest teilweise abdeckt (23).

7. Trennwand (40) nach einem der Ansprüche 1 bis 6,
bei der die Lichtquellen (2) elektrolumineszente Farben oder Tinten umfassen.

8. Trennwand (40) nach Anspruch 7,
bei der die Lichtquellen (2) mehrere übereinanderliegende Schichten umfassen, darunter mindestens eine leitfähige Schicht, mindestens eine elektrisch isolierende Schicht, eine elektrolumineszente Farb- oder Tintenschicht und mindestens eine transparente oder durchscheinende Schutzschicht.

9. Trennwand (40) nach einem der Ansprüche 1 bis 8,
bei der die Trennwand (40) einen Leuchtrahmen (30) aufweist, der an der Struktur (41) um die Platte (45) herum befestigt ist, wobei der Leuchtrahmen (30) einen Träger (31) aufweist, auf dem die Lichtquellen (2) angeordnet sind.

10. Trennwand (40) nach Anspruch 9,
bei der der Träger (31) eine Form und ein Relief aufweist, die zu einer Form und einem Relief der Struktur (41) um die Platte (45) herum komplementär sind.

11. Trennwand (40) nach einem der Ansprüche 9 bis 10,
bei der der Leuchtrahmen (30) die elektrische Schaltung (4) und die Stromversorgungsvorrichtung (3) umfasst.

12. Trennwand (40) nach einem der Ansprüche 1 bis 11,
bei der die mindestens eine erste Quelle (21) und die mindestens eine zweite Quelle (22) nur innerhalb eines Fahrzeugs (10), nur außerhalb des Fahrzeugs (10) oder gleichzeitig innerhalb und außerhalb des Fahrzeugs (10) angeordnet sind.

13. Fahrzeug (10) mit mindestens einer Trennwand nach einem der Ansprüche 1 bis 12.

## Claims

1. Partition (40) for a vehicle (10), said partition (40) having a structure (41) delimiting an opening (43) forming an emergency exit (44), said partition (40) having a movable panel (45) blocking said emergency exit (44), and at least one ejection handle (46) enabling an ejection of said panel (45), said partition (40) having an assistance device (1) comprising an electrical power device (3), electrically powering an electrical circuit (4), said assistance device (1) comprising light emitters (2) electrically connected to the electrical circuit (4), said light emitters (2) generating a light when said electrical circuit (4) is electrically powered by said electrical power device (3), said light emitters (2) comprising at least one first emitter (21) emitting a first light of a first colour, and at least partially framing said panel (45), as well as at least one second emitter (22) emitting a second light
indicating a position of the ejection handle (46),
**characterised in that** said second light is of a colour distinct from said first colour and that said first light and said second light jointly form a light strip which at least partially frames said panel (45).

2. Partition (40) according to claim 1, according to which said first light forms a light strip which at least partially frames said panel (45).

3. Partition (40) according to any one of claims 1 to 2, according to which said at least one second emitter (22) emitting said second light is opposite said ejection handle (46).

4. Partition (40) according to any one of claims 1 to 2,
according to which said at least one second emitter (22) emitting said second light at least partially frames said ejection handle (46).

5. Partition (40) according to any one of claims 1 to 4,
according to which said assistance device (1) has a masking (5) forming one or more main symbols (6) and at least partially covering said at least one first emitter (21) or said at least one second emitter (22).

6. Partition (40) according to any one of claims 1 to 5,
according to which said light emitters (2) comprise at least one third emitter (23) emitting a third light, a partial mask (52) forming one or more symbols and at least partially covering said at least one third emitter (23).

7. Partition (40) according to any one of claims 1 to 6,
according to which said light emitters (2) have light-emitting paints or light-emitting inks.

8. Partition (40) according to claim 7,
according to which said light emitters (2) have a superimposition of layers, including at least one conductive layer, at least one electrically insulating layer, a light-emitting paint or light-emitting ink layer, and at least one transparent or translucid protective layer.

9. Partition (40) according to any one of claims 1 to 8,
according to which said partition (40) has a light frame (30) fixed on said structure (41) around said panel (45), said light frame (30) having a support (31) on which said light emitters (2) are arranged.

10. Partition (40) according to claim 9,
according to which said support (31) has a shape and a raised element which are complementary to a shape and of a raised element of said structure (41) around said panel (45).

11. Partition (40) according to any one of claims 9 to 10,
according to which said light frame (30) has said electrical circuit (4) and said electrical power device (3).

12. Partition (40) according to any one of claims 1 to 11,
according to which said at least one first emitter (21) and said at least one second emitter (22) are arranged only inside a vehicle (10), only outside of said vehicle (10) or simultaneously inside and outside of said vehicle (10).

13. Vehicle (10) having at least one partition (40) according to any one of claims 1 to 12.
